(19) Europäisches Patentamt
European Patent Office
Office européen des brevets

(11) **EP 2 075 564 A2**

(12) **EUROPÄISCHE PATENTANMELDUNG**

(43) Veröffentlichungstag:
**01.07.2009 Patentblatt 2009/27**

(51) Int Cl.:
***G01M 1/30*** *(2006.01)*

(21) Anmeldenummer: **08022245.8**

(22) Anmeldetag: **22.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **28.12.2007 DE 102007063025**

(71) Anmelder: **Schenck RoTec GmbH**
**64293 Darmstadt (DE)**

(72) Erfinder:
• **Fuchs, Ralf-Michael Dr**
**60329 Frankfurt (DE)**
• **Lemser, Matthias**
**64331 Weiterstadt (DE)**
• **Rogalla, Martin**
**64297 Darmstadt (DE)**
• **Lipponer, Georg**
**64673 Zwingenberg (DE)**

(74) Vertreter: **Behrens, Helmut**
**Gross-Gerauer Weg 55**
**64295 Darmstadt (DE)**

(54) **Verfahren und Vorrichtung zur optimierten Fertigung von Fahrzeugrädern**

(57) Die Erfindung betrifft ein Verfahren und eine Vorrichtung zur optimierten Fertigung von Fahrzeugrädern durch Matchen, wobei zunächst die Winkellage mit der maximalen Radialkraftschwankung des Reifens und die Winkellage des Minimalwertes der Rundlaufabweichung der Felge ermittelt wird. Daraus wird die gemeinsame Match-Winkellage von Felge und Reifen derart bestimmt, bei der die maximale Radialkraftabweichung des Reifens und die minimale Rundlaufabweichung der Felge entsprechend ihrer Beträge kompensieren. Die Erfindung ist dadurch gekennzeichnet, dass zur Optimierung der Urunwucht des Fahrzeugrades zusätzlich aus der Exzentrizität der Felge unter Berücksichtigung der typabhängigen Reifensteifigkeit der Betrag der maximalen Radialkraftschwankung ermittelt wird, woraus unter Berücksichtigung der ermittelten oder vorgegebenen zulässigen Radialkraftschwankung des Reifens ein zulässiger Verdrehwinkel zwischen der Felge und dem Reifen errechnet wird. Dazu wird zusätzlich die Unwuchtwinkellage des Reifens und der Betrag und die Winkellage der Unwucht der Felge ermittelt. Zur Unwuchtoptimierung des montierten Fahrzeugrades wird daraus die Verdrehwinkellage zwischen der Felge und dem Reifen unter Berücksichtigung des zulässigen Verdrehwinkelbereichs des Radialkraftmatchens durch Differenzbildung der Unwuchtwinkellage des Reifens und der Unwuchtwinkellage der Felge der Verdrehwinkel errechnet, bei dem die Unwucht am geringsten ist.

Fig. 2

EP 2 075 564 A2

## Beschreibung

Die Erfindung betrifft ein Verfahren zur optimierten Fertigung von Fahrzeugrädern nach dem Oberbegriff des Patentanspruchs 1, sowie eine Vorrichtung zur Durchführung des Verfahrens nach dem Oberbegriff des Patentanspruchs 16.

Die Fertigung von Fahrzeugrädern für PKWs erfolgt in der Regel beim Fahrzeughersteller oder bei speziellen Vorlieferanten, denen die Reifen und Felgen ebenfalls zugeliefert werden. Der Fahrzeughersteller bestückt dann die vorgesehenen Felgen mit den zugehörigen Reifen, zieht die Reifen auf die Felgen auf und befüllt diese mit Luft und wuchtet die vorgefertigten Fahrzeugräder noch aus, bevor sie am Fahrzeug befestigt werden. Dazu müssen die fertigen Fahrzeugräder qualitativ sehr hochwertig hergestellt werden, damit sie am Fahrzeug die höchstmögliche Laufruhe aufweisen, da bereits relativ geringe Fertigungstoleranzen insbesondere bei hohen Fahrzeuggeschwindigkeiten die Laufruhe des Fahrzeuges erheblich beeinträchtigen können.

Deshalb werden bereits beim Reifenhersteller die vorgefertigten Reifen erheblichen Qualitätsprüfungen unterzogen, um die geforderten Toleranzgrenzen, insbesondere bei der Radialkraftschwankung, Unrundheit und der Unwucht nicht zu überschreiten. Dazu werden diese Werte des Reifens meist schon beim Reifenhersteller mittels sogenannter Uniformity-Maschinen und Auswuchtmaschinen gemessen und bei Nichteinhaltung der geforderten Toleranz aussortiert. Bei Einhaltung der Toleranzgrenzen ist es heute üblich, dass die Reifenhersteller bereits die Winkellagen mit dem Maximalwert als Maximum der ersten harmonischen der Radialkraftschwankung, der Unwucht und der Unrundheit mit verschiedenfarbigen Punkten markieren.

Deshalb werden auch die Felgen bereits von ihren Herstellern auf Einhaltung der entsprechenden Fertigungstoleranzen überprüft. Dazu werden insbesondere die Einhaltung der Exzentrizitätstoleranz und die Unwuchttoleranz nachgemessen, wobei die Winkellage bei der kleinsten oder größten Exzentrizitätsabweichung durch eine Markierung, durch setzen der Ventilbohrung vorgegeben oder als Winkel relativ zur Ventilbohrung festgehalten wird.

Es ist deshalb seit langem bekannt, die Laufruhe der Räderfertigung durch ein drehwinkelgenaues Ausrichten als sogenanntes "Matchen" zu verbessern. Aus der DE 10 2004 006 822 A1 ist ein Matchmaschine bekannt, in der der Reifen gegenüber der Felge so ausgerichtet oder verdreht wird, dass sich die Radialkraftschwankung des Reifens gegenüber der Unrundheit der Felge möglichst ausgleichen. Dazu wird der Maschine ein Komplettrad zugeführt, bei dem auf der Felge bereits der Reifen in einer beliebigen Winkellage montiert ist. Die Felge wird in der Maschine drehbar eingespannt und der Reifen durch Spannbacken festgeklemmt. Durch ein Kamerasystem wird die von dem Reifenhersteller an der Reifenflanke angebrachte Markierung der Winkellage mit der minimalen Radialkraftschwankung erfasst. Gleichzeitig wird durch das Kamerasystem auch die von dem Felgenhersteller an der Felge angebrachte Markierung der Winkellage mit der maximalen Rundlaufabweichung ermittelt und einer Auswertevorrichtung zugeführt, die daraus einen Verdrehwinkel errechnet, bei dem beide Markierungen die gleiche Winkellage aufweisen und sich deshalb dessen Wirkungen bezüglich der Laufruhe entsprechend kompensieren. Dann wird die Felge entsprechend dem ermittelten Drehwinkel verdreht und die Lage der beiden Matchpunkte nochmals kontrolliert und gegebenenfalls der Vorgang wiederholt. Anschließend kann das Rad mit Luft befüllt und ausgewuchtet werden. Da eine derartige Optimierung der Radialkraftschwankungen sich nachteilig auf die Urunwucht des luftbefüllten Rades auswirken kann, müssen beim Auswuchten häufig verhältnismäßig große Ausgleichsmassen zum Unwuchtausgleich vorgesehen werden.

Es ist allerdings aus der DE 30 03 127 A1 bekannt, ein Fahrzeugrad so zu montieren, dass beim späteren Auswuchten die Größe der verwendeten Ausgleichsmasse so klein wie möglich gehalten wird. Dazu wird zunächst für das montierte und befüllte Fahrzeugrad die dynamische Unwuchtwirkung gemessen und daraus die statische Unwuchtwinkellage des Reifens und die statische Unwuchtwinkellage der Felge durch mehrere Mess- und Rechenvorgänge abgeleitet. Da die Urunwucht des Fahrzeugrades dadurch optimierbar ist, dass die statische Unwuchtwinkellage der Felge und die des Reifens um 180˚ gegeneinander versetzt sind, wird in einer Rechenvorrichtung daraus ebenfalls ein Winkel zur drehwinkelgenauen Ausrichtung errechnet. Daraus ergibt sich ebenfalls ein Verdrehwinkel um den die Felge gegenüber dem Reifen so verdreht wird, dass sich die dann gegeneinander gerichteten Unwuchtwirkungen minimieren. Allerdings hat sich in der Praxis herausgestellt, dass der Unwuchtverlauf eines montierten Fahrzeugrades keineswegs mit dem Verlauf seiner Radialkraftschwankungen korreliert, so dass sich bei einem Unwuchtmatchen die Radialkraftschwankung über dessen zulässige Toleranzgrenze erhöhen kann. Da die Überschreitung der zulässigen Toleranz der Radialkraftschwankung sich auch durch den nachfolgenden Auswuchtvorgang nicht mehr verbessern lässt, wäre ein derartiges Fahrzeugrad nur in Ausnahmefällen verwendbar.

Der Erfindung liegt deshalb die Aufgabe zugrunde, die Fertigung von Fahrzeugrädern derart zu optimieren, dass in jedem Fall die maximal zulässige Radialkraftschwankung eingehalten wird und gleichzeitig die Urunwuchtwirkung so verringert wird, dass beim Endauswuchten mit möglichst geringen Ausgleichsmassen auszukommen ist.

Diese Aufgabe wird durch die im Patentanspruch 1 und 16 angegebene Erfindung gelöst. Weiterbildung und vorteilhafte Ausführungsbeispiele der Erfindung sind in den Unteransprüchen angegeben.

Die Erfindung hat den Vorteil, dass mit ihr zwei unterschiedliche Zielfunktionen bei der Fahrzeugradherstellung so aufeinander abgestimmt werden, dass sich beide so verringern, dass insbesondere die Laufruhe durch die winkelgemäße Montage verbessert werden kann. Gleichzeitig wird vorteilhafterweise sichergestellt, dass durch die optimierte Herstellung der Räder sich auch verhältnismäßig große Fertigungsabweichungen beim Reifen und bei der Felge nicht so additiv ergänzen, dass das Komplettrad zulässige Grenzwerte oder Herstellungstoleranzen überschreitet.

Dabei hat insbesondere die Verringerung der Urunwuchtwirkung des montierten Komplettrades den Vorteil, dass beim nachfolgenden dynamischen Auswuchten stets kleinere Ausgleichsgewichte an der Felge befestigt werden müssen, wodurch nicht nur Kosten und Gewicht eingespart wird, sondern sich insbesondere auch die optische Wirkung als Qualitätsstandard insbesondere bei Laufrädern mit Aluminiumfelgen verbessert.

Das erfindungsgemäße optimierte Herstellungsverfahren hat zusätzlich noch den Vorteil, dass es gegenüber den heute standardmäßigen Punkt-zu-Punkt-Matchen bei der Radialkraftschwankung bis auf zusätzliche Rechenschritte keinen nennenswerten Mehraufwand erfordert. Denn üblicherweise werden vom Reifenhersteller bereits die Winkellagen der Unwucht und der Radialkraftschwankung durch eine Punktmarkierung am Reifen angegeben. Weiterhin werden meist von den Felgenherstellern die.Exzentrizitätswinkellage durch entsprechende Anordnung der Ventilsitze markiert, so dass es im Grunde nur noch der Erfassung der Unwucht der Felge bedarf, um eine Verbesserung der Urunwucht beim montierten Komplettrad zu erzielen.

Bei einer besonderen Ausführung der Erfindung ist dazu eine zentrale Auswerte- und Steuervorrichtung vorgesehen, durch die nicht nur eine vollautomatische Erfassung der Einstell- und Berechnungsgrößen möglich ist, sondern durch die in vorteilhafterweise nicht nur die winkelgerechte Montage, sondern der gesamte Herstellungsprozess weitgehend automatisch steuerbar ist. Durch die zentrale Auswerte- und Steuervorrichtung ist in vorteilhafterweise eine zusätzliche Kontrolle zwischen dem errechneten Eingangsgrößen und den tatsächlichen Messwerten am Ende der Herstellungslinie in der Auswuchtstation möglich, so dass durch festgestellte strukturelle Abweichungen Korrekturwerte zu den errechneten Verdrehwinkeleinstellungen errechenbar sind, durch die die Optimierung zusätzlich innerhalb des zulässigen Radialkraftschwankungsbereichs verbessert werden kann.

Bei einer weiteren vorteilhaften Ausführung ist auch gleichzeitig vorgesehen, neben der Verbesserung der Urunwucht auch noch die Rundlaufabweichung des montierten Rades innerhalb der Radialkraftschwankungsgrenzen zu verbessern. Hierdurch lässt sich vorteilhafterweise auch die Gesamtlaufruhe des hergestellten Rades günstig beeinflussen.

Die Erfindung wird anhand eines Ausführungsbeispiels, das in der Zeichnung dargestellt ist, näher erläutert. Es zeigen:

Fig. 1    eine schematische Fertigungslinie zur Optimierung der Laufruhe von Fahrzeugrädern;

Fig. 2    ein Vektordiagramm zur Ermittlung der zulässigen Winkelabweichung beim Radialkraftschwankungs-Matchen und

Fig. 3    ein Vektordiagramm zur Ermittlung der optimierten Urunwucht eines Fahrzeugrades.

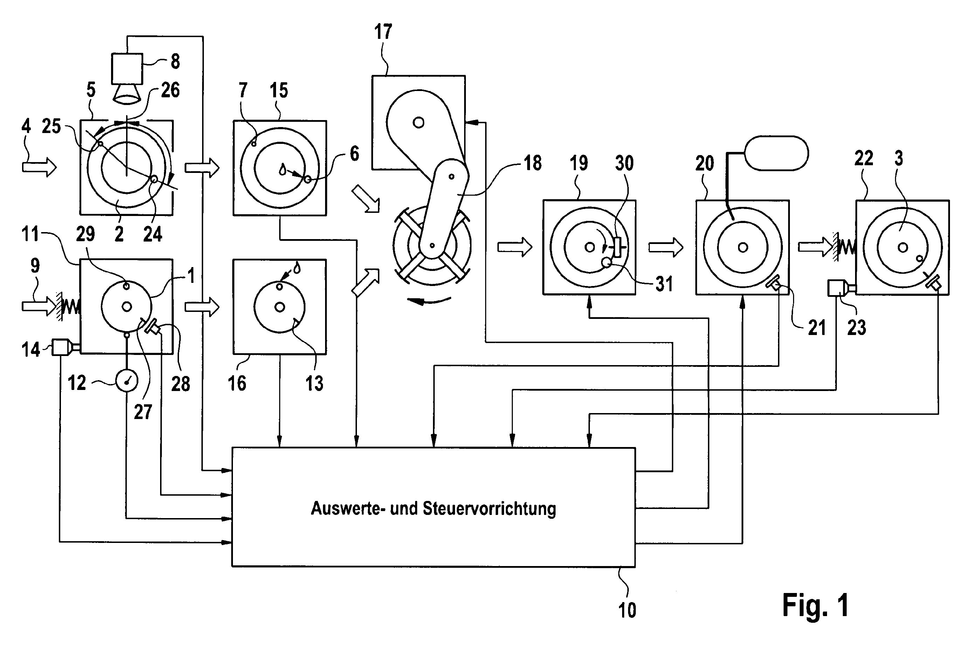

In Fig. 1 der Zeichnung ist schematisch eine Radfertigungslinie als Vorrichtung zur optimierten Herstellung von Fahrzeugrädern dargestellt, bei der die Reifen 2 auf einer Felge 1 montiert und gefüllt werden, bei der innerhalb der zulässigen Radialkraftabweichung $\vec{F}_{max}$ eine minimierte Urunwuchtwirkung $\vec{U}_K$ des Fahrzeugrades 3 erzielt wird.

Dazu enthält die Vorrichtung zur optimierten Fahrzeugradherstellung im Bereich des Reifenzulaufs 4 mindestens eine Winkelerfassungsvorrichtung 5 mit der die Winkellage 24,25 der maximalen Radialkraftschwankung $\vec{F}_R$ und der Unwucht $\vec{U}_R$ des Reifens 2 erfasst wird. Diese beiden Winkellagen 24,25 werden meist bereits vom Reifenhersteller mit sogenannten Reifengleichförmigkeitsmessmaschinen (Uniformity-Maschine) ermittelt und durch eine Punktmarkierung 24,6 auf der Reifenflanke angegeben. Dazu wird der Reifen 2 unter Last abgerollt und deren Radialkraft $\vec{F}_R$ während mindestens einer Umdrehung um einen Mittelwert erfasst und analysiert. Dabei erhält man dann die Amplituden $|F_R|$ und Phasenlagen $\alpha_{FR}$ der ersten Ordnung als Vektor $\vec{F}_R$ in einem Radkoordinatensystem.

Diese Radialkraftschwankung $\vec{F}_R$ resultiert physikalisch hauptsächlich aus den Steifigkeits- und Rundlaufabweichungen des Reifenkörpers, die auf einer fehlerfreien Felge bei geringer Drehzahl von einer sogenannten Reifen-Uniformity-Maschine ermittelt werden, wobei der Reifenhersteller mindestens die Winkellage $\alpha_{FeR}$ des Hochpunkts der harmonischen erster Ordnung als z.B. roten Punkt 24,6 auf der Reifenflanke markiert. Gleichzeitig kann aber auch der Betrag der Amplitude $|F_R|$ der Radialkraftschwankung als Strichcode oder dergleichen angegeben und am Reifen 2 automatisch ablesbar markiert sein.

Eine derartige Reifen-Uniformity-Maschine kann aber auch in den Räderfertigungsprozess mit einbezogen sein, wobei dann die Winkellage $\alpha_{FeR}$ und die Amplitude $|F_R|$ auch unmittelbar einer vorhandenen elektronischen Auswerte- und Steuervorrichtung 10 zuführbar ist. Durch die Ermittlung der Amplitude $|F_R|$ der Radialkraftschwankung des Reifens 2 wird gleichzeitig die Einhaltung der maximal zulässigen Radialkraftschwankung beim Reifenhersteller kontrolliert, bei dessen Überschreiten der Reifen als fehlerhaft aussortiert werden muss. Eine typische Toleranzgrenze der Amplituden erster Ordnung der Radialkraftschwankung liegt derzeit bei $|\vec{F}_{Rmax}|$= 80 N.

Mit einer derartigen Uniformity-Maschine kann auch gleichzeitig die Unwuchtwirkung des Reifens 2 ermittelt werden. Dabei resultiert die Unwuchtwirkung $\vec{F}_R$ des Reifens 2 physikalisch darauf, dass der Massenschwerpunkt nicht unmittelbar auf der Rotationsachse liegt und deshalb im Fahrbetrieb zu Radschwingungen führt. Da sich derartige Unwuchten $\vec{F}_R$ beim montierten Rad durch eine Felgenunwucht $\vec{F}_{Fe}$ noch verstärken können, dürfen bereits die Reifen 2 bestimmte Höchstwerte nicht überschreiten. Deshalb werden diese Reifenunwuchten $\vec{F}_R$ bereits vom Reifenhersteller überprüft und oft dessen Hochpunkt als Winkellage 25,7 an der Reifenflanke durch einen andersfarbigen z.B. gelben Punkt markiert. Die Reifenunwucht $\vec{U}_R$ kann als statische Unwucht auch beim Radhersteller mittels einer statischen Unwuchtmessstation nach Betrag $|U_R|$ und Winkellage $\alpha_{UR}$ ermittelt werden und der Winkelerfassungsvorrichtung 5 vorgelagert sein.

In der Winkelerfassungsvorrichtung 5 wird nach der Zuführung des Reifens 2 in jedem Fall mindestens mittels einer optischen Erfassungsvorrichtung 8, wie z.B. einer Kameraeinrichtung die Markierung 24,7 der maximalen Radialkraftabweichung $\vec{F}_R$ und die Unwuchtwinkellage 25 erfasst und einer Auswerte- und Steuervorrichtung 10,6 zugeführt. Dabei wird der Reifen 2 vorzugsweise horizontal ausgerichtet und senkrecht von oben durch die Kameraeinrichtung abgetastet. Die beiden verschiedenfarbigen Punkte 24,25 werden innerhalb eines vorgegebenen Koordinatensystems erfasst und dessen Winkellage zueinander oder zu einer Bezugswinkellage 26 in der Auswerteund Steuervorrichtung 10 gespeichert. Da die Unwuchtwirkung des Reifens 2 hauptsächlich durch seine Rundlaufabweichungen $\Delta r_R$, Dichteschwankungen oder in einer inneren Formabweichung begründet ist, weicht die Unwuchtwinkellage $\alpha_{UR}$,25 in der Praxis meist erheblich von der Winkellage $\alpha_{FR}$,24 der maximalen Radialkraftschwankung $\vec{F}_R$ ab.

Zur optimierten Ausrichtung des zugeführten Reifens 2 und einer diesem zugeordneten Felge 1 ist parallel zur Reifenzulaufstelle 4 eine Felgenzulaufstelle 9 vorgesehen, wo die Felge 1 einer Felgenmessvorrichtung 11 zugeführt wird. Denn in der Praxis weisen herkömmliche Fahrzeugfelgen 1 Fertigungstoleranzen auf, die zur Rundlaufabweichung $\Delta \vec{F}$ und/oder anderen Geometrieabweichungen führen und somit auch unterschiedliche Radialkraftabweichungen $\vec{F}_K$ und Unwuchten $\vec{F}_K$ am fertig montierten Komplettrad 3 verursachen können. Für diese Radialkraftabweichung $\vec{F}_K$ am montierten Fahrzeugrad 3 ist im wesentlichen die Exzentrizität $\Delta \vec{F}_{Fe}$ der Felge 1 ursächlich, die deshalb zunächst von einer Felgenmessvorrichtung 11 ermittelt wird. Denn beim rotierenden Fahrzeugrad erzeugt die Exzentrizität $\Delta \vec{F}_{Fe}$ der Felge 1 in Verbindung mit der Reifensteifigkeit $C_R$ auch eine Radialkraftschwankung $\vec{F}_{Fe}$, die durch ein gegenläufiges Verdrehen bzw. Matchen minimierbar ist. Dabei weisen Aluminiumfelgen eine typische Exzentrizität $\Delta \vec{F}_{Fe}$ von 0,1 mm und Stahlfelgen von 0,4 mm auf. Die Steifigkeit $C_R$ der Reifen 2 ist dabei typabhängig und ist somit vorgegeben und beträgt Werte $c_R$ von 200 bis 400 N/mm, die multipliziert mit der Exzentrizität $\Delta \vec{F}_{Fe}$ einen Wert für die durch die Felge verursachte Radialkraftabweichung $\vec{F}_{Fe}$ ($\vec{F}_{Fe} = c_R * \Delta \vec{F}$) der Felge 1 ergibt, die im Radkoordinatensystem einen Vektor darstellt.

Deshalb wird in der Felgenmessvorrichtung 11 die Felge 1 genau zentriert eingespannt und während mindestens eines Umlaufs dessen Rundlaufabweichung $\Delta \vec{F}_{Fe}$ bzw. deren Exzentrizität vorzugsweise durch Abtastung mittels eines Mikrometers an beiden Wulstsitzen unter Bildung eines arithmetischen Mittelwertes nach Betrag und Winkellage ermittelt. Vorzugsweise wird dabei der Tiefpunkt des Felgenrundlaufs und dessen Winkellage $\alpha_{FFe}$ 27 festgestellt. Dabei wird diese Exzentrizität $\Delta \vec{F}_{Fe}$ häufig auch schon vom Felgenhersteller ermittelt, wobei die Tiefpunktwinkellage $\alpha_{FFe}$ 27 durch Setzen eines Körnerschlags im Felgentiefbett markiert wird. Für eine spätere Markierung der Winkellage 27 kann die Ventilbohrung auch als 0°-Referenzpunkt bestimmt werden, wobei diese zur Bestimmung der Tiefpunktwinkellage von einem Winkellagenaufnehmer 28 abgetastet und innerhalb eines Radkoordinatensystems festgelegt und in der Auswerte- und Steuervorrichtung 10 gespeichert wird.

In der Felgenmessvorrichtung 11 wird vorzugsweise auch gleichzeitig die Unwucht $\vec{F}_{Fe}$ der Felge 1 ermittelt. Dazu ist an der Felgenmessvorrichtung 11 vorzugsweise noch ein Schwingungsaufnehmer 14 vorgesehen, mit dessen Hilfe auf herkömmliche Weise der Betrag $|U_{Fe}|$ und der Winkel $\alpha_{UFe}$ 29 der statischen Unwucht der Felge 1 ermittelt wird. Diese Werte werden auch der Auswerte- und Steuervorrichtung 10 zugeführt und dort gespeichert und stellen im Radkoordinatensystem ebenfalls einen Vektor $\vec{F}_{Fe}$ dar.

In der Auswerte- und Steuervorrichtung 10 wird mit Hilfe verschiedener Rechenprogramme die optimierte Montagezuordnung zwischen Felge 1 und Reifen 2 ermittelt, bei der die Radialkraftschwankung $\vec{F}_K$ des Komplettrades 3 innerhalb der zulässigen Toleranz verbleibt und gleichzeitig die Unwuchtwirkung $\vec{F}0_K$ des montierten Komplettrades 3 eine minimierte Urunwucht $\vec{F}^*_K$ aufweist. Diese kann in der Auswerte- und Steuervorrichtung 10 durch eine Vektorrechnung oder vergleichbare mathematische Funktionen sowohl analog als auch digital bestimmt werden.

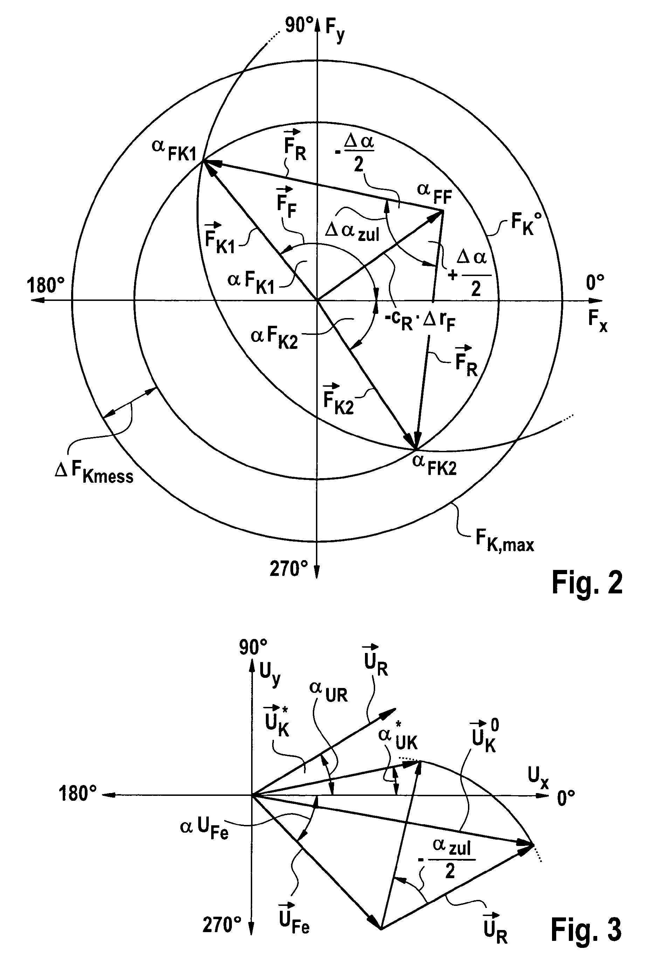

Eine derartige Vektorrechnung ist aus der schematischen Darstellung in Fig. 2 der Zeichnung ersichtlich, in der zunächst die Radialkraftschwankungsvektoren des Reifens $\vec{F}_R$ und der Felge $\vec{F}_{Fe}$ innerhalb eines Koordinatensystems dargestellt sind. Beim Radialkraft-Matchen wird in bekannter Weise zur Minimierung vorgesehen, dass die Hochpunktwinkellage $\alpha_{FR}$, 24 des Reifens 2 bis auf die Tiefpunktwinkellage $\alpha_{FFe}$, 27 der Felge 1 eingedreht wird, wobei durch das sogenannte Punkt-zu-Punkt-Matchen die Radialkraftschwankung $\vec{F}0_K$ des montierten Komplettrades 3 minimierbar ist. Dabei kommt es im Grunde auf die Beträge $|F_R|$ und $|F_{Fe}|$ der Amplituden nicht an, so dass dafür die Punktmarkierung 24,6 (rot) auf der Reifenflanke und die Markierung 27,13 durch die Ventilbohrung nur in Deckung gebracht werden müssen.

Da die erfindungsgemäße Optimierung gleichzeitig die Urunwucht $\vec{U0}_K$ des montierten Fahrzeugrades 3 verringern will, muss von dem bekannten Punkt-zu-Punkt-Matchen abgewichen werden. In einem ersten Durchführungsverfahren ist deshalb zunächst der Vektor für die Radialkraftschwankungswirkung $\vec{F}_{Fe}$ der Felge 1 aus der bekannten Steifigkeit $c_R$ des zugeführten Reifens 2 von z.B. $c_R$ = 200 bis 400 N/mm nach der Formel:

$$\vec{F}_{Fe} \;=\; c_R \;*\; \vec{\Delta r}_{Fe}$$

zu bestimmen, wobei die Exzentrizität $\vec{\Delta r}_{Fe}$ als Vektor in der Felgenmessvorrichtung 11 ermittelt wurde. Da die maximal zulässige Radialkraftschwankung $\vec{F}_{R,max}$ des Reifens 2 mit z.B. $|\vec{F}_{R,max}|$=80 N bekannt ist, reicht bereits dessen Winkellage $\alpha_{FR}$ die meist bereits vom Reifenhersteller durch den roten Punkt 24,6 bekannt ist, um das erfindungsgemäß Verfahren ohne weitere Betragsmessungen durchzuführen. Dabei wird dann vorausgesetzt, dass der Reifen 2 in der vorgesehenen Winkellage $\alpha_{FR}$ die maximal zulässige Radialkraftschwankung $\vec{F}_{R,max}$ von höchstens 80 N aufweist. Gleichzeitig darf auch das fertig montierte Rad dem maximal zulässigen Wert $\vec{F}_{K,max}$ von höchstens 80 N nicht überschreiten, so dass das Radialkraftmatchen innerhalb dieses Toleranzbereichs $\vec{F}_{K,max}$ durchzuführen ist, der als Betragswert $|_{K,max}|$ für alle Winkellagen in dem Koordinatensystem eingetragen ist. Gleichzeitig muss auch noch eine Messungenauigkeit $\Delta F_{K,mess}$ innerhalb eines reduzierten Resonanzkreises berücksichtigt werden, so dass ein um z.B. 10 N kleinerer Betragswert $F^0_K$ als Betragskreis im Koordinatensystem festgelegt wird. Innerhalb dieses Betrageskreises $F^0_K$ = 70 N wird nun eine Vektoraddition zwischen der errechneten Radialkraftschwankung $\vec{F}_{Fe}$ der Felge 1 und der vorgegebenen Radialkraftschwankung $\vec{F}_R$ des Reifens $\vec{F}_R$ = 80 N durchgeführt, so dass sich daraus zwei maximal zulässige Verdrehungswinkel $\alpha_{FK1}$ und $\alpha_{FK2}$ ergeben, innerhalb dessen Bereich $\Delta\alpha_{zul}$ = $\alpha_{FK1}$ - $\alpha_{FK2}$ das Radialkraft-Matchen den Betragswert von $F^0_K$ = 70 N innerhalb des zweiten Toleranzkreises $F^0_K$ als reduzierten Resonanzkreises nicht überschreitet.

Zur Optimierung und Minimierung der Urunwucht $\vec{U0}_K$ des montierten Fahrzeugrades wird nun dieser Bereich ausgenutzt, im dem die Unwuchtwirkung innerhalb dieses Bereiches mit der Radialkraftwirkung $F^0_K$ verknüpft wird, um die Unwuchtvektoren der beiden Einzelteile zu einer möglichst kleinen Gesamtunwucht des Komplettrades zu kombinieren. Dazu werden innerhalb des Koordinatensystems die Unwuchtvektoren der Felgenunwucht $\vec{U}_{Fe}$ mit der des Reifens $\vec{U}_R$ so addiert, dass sich die Gesamtunwucht $\vec{U0}_K$ verringert und sich dadurch aber gleichzeitig die Radialkraftschwankung $\vec{F^0}_K$ nicht über den zulässigen Bereich des zweiten reduzierten Toleranzkreises ($F^0_K$ = $F_{K,max}$ - $\Delta F_{K,mess}$) erstreckt.

Diese Vektoraddition ist in Fig. 3 der Zeichnung grafisch dargestellt, wie sie in der Auswerte- und Steuereinrichtung 10 mathematisch durchgeführt wird. Dem liegt die Erkenntnis zugrunde, dass die Radialkraftschwankungsvektoren $\vec{F}_R, \vec{F}_K$ aufgrund unterschiedlicher Ursachen zwar nicht mit den Unwuchtvektoren $\vec{U}_R, \vec{U}_{Fe}$ korrelieren, sie sich aber völlig analog zu diesen addieren, da die Winkelabstände konstant sind. Bei einem durchgeführten Punkt-zu-Punkt-Matchen ergäbe sich deshalb eine Urunwucht $U^0_K$, wie sie im Koordinatensystem in Fig. 3 der Zeichnung dargestellt ist, wobei die Felgenunwucht $\vec{U}_{Fe}$ und die Reifenunwucht $\vec{U}_R$ sich entsprechend ihrer Beträge $|\vec{U}_R|$, $|\vec{U}_{Fe}|$ und ihrer Winkellagen 25,29 vektormäßig addieren würden, wodurch die Gesamtunwucht $\vec{U0}_K$ in der Regel größer als die Einzelunwuchten $\vec{U}_{Fe}$ und $\vec{U}_R$ ist. Deshalb liegt der Erfindung die weitere Erkenntnis zugrunde, dass zur Unwuchtoptimierung der Reifen 2 gegenüber der Felge 1 innerhalb des zulässigen Winkelbereichs $\Delta\alpha_{zul}$ gegenüber der fluchtenden Winkellage $\alpha_{FFe}$ so weit zu verdrehen ist, dass der Additionswinkel zwischen der Felgenunwucht $\vec{U}_{Fe}$ und der Reifenunwucht $\vec{U}_R$ sich in Richtung 180˚ vergrößert, um die Gesamtunwuchtwirkung $\vec{U}_K$ zu verringern.

Deshalb reicht es im Grunde für die Optimierung der Unwuchtwirkung $\vec{U0}_K$ aus, wenn nur die Winkellagen $\alpha_{UFe}$ 29 der Felgen 1 und $\alpha_{UR}$ 25 der Reifen 2 bekannt sind, um den optimalen Verdrehungswinkel $\dfrac{\Delta\alpha_{zul}}{2}$ zu errechnen.

Denn durch den ermittelten maximal zulässigen Verdrehungswinkel $\Delta\alpha_{zul}$ ergeben sich gegenüber der Fluchtung $\alpha_{FFe}$ ($F_{Fe}$) beim Punkt-zu-Punkt-Matchen zwei Drehrichtungen $\pm\,\dfrac{\Delta\alpha_{zul}}{2}$ wobei in einer Richtung $\dfrac{\Delta\alpha_{zul}}{2}$ der Differenzwinkel zwischen der Felgenunwucht $\vec{U}_{Fe}$ und der Reifenunwucht $\vec{U}_R$ sich zu 180˚ vergrößert oder verkleinert. Deshalb wird in der Auswerte- und Steuervorrichtung 10 aus dem vorgegebenen oder ermittelten Felgen- $\alpha_{UFe}$, 29 und Reifenunwuchtwinkeln $\alpha_{UR}$, 25 dessen Differenz $\Delta\alpha_U$ ($\Delta\alpha_U$ =$\alpha_{UFe}$ - $\alpha_{UR}$) errechnet. Zu diesem Differenzwert $\Delta\alpha_U$ wird dann in einer erneuten Rechnung als optimierte Winkellage $\alpha^*_{UK}(\vec{U}_K)$ einmal der maximal zulässige Verdrehwinkel $\dfrac{\Delta\alpha_{zul}}{2}$ addiert und in einer weiteren Rechnung $\left[\ \alpha^*_{UK}(\vec{U}^*_K)\ =\ \Delta\alpha_U \pm\ \dfrac{\Delta\alpha_{zul}}{2}\ \right]$ subtrahiert, wobei diese beiden

Werte $[\pm\alpha_{UK}(\vec{U}^*K)]$ dann von 180˚ subtrahiert werden, wobei der Verdrehungswinkel $+\dfrac{\Delta\alpha_{zul}}{2}$ oder $-\dfrac{\Delta\alpha_{zul}}{2}$ die optimierte Urunwucht $\vec{U}^*_K$ ergibt, dessen Differenz zu 180˚ am geringsten ist.

Dabei ist zur Optimierung der Urunwucht $\vec{U}^*_K$ des montierten Fahrzeugrades der maximal zulässige Verdrehungswinkel $\pm\dfrac{\Delta\alpha_{zul}}{2}$ auszunutzen, da dies eine Minimierung an Ausgleichsgewichten beim späteren Auswuchtvorgang bewirkt.

Sind hingegen wie im Ausführungsbeispiel beschrieben nicht nur die Winkellagen $\alpha_{UFe}$, $\alpha_{UR}$, sondern auch die Beträge für $|\vec{U}_{Fe}|$ und $|\vec{U}_R|$ bekannt, so kann durch eine Vektoraddition für beide Verdrehungswinkel $\pm\dfrac{\Delta\alpha_{zul}}{2}$ der minimierte Betrag $\vec{U}^*_K$ unmittelbar errechnet werden. Dabei ergibt sich bereits aus den Betragswerten $|\vec{U}_{Fe}|, |\vec{U}_R|$ für die beiden möglichen Verdrehungswinkel $+\dfrac{\Delta\alpha_{zul}}{2}$ und $-\dfrac{\Delta\alpha_{zul}}{2}$ die minimierte Urunwucht $\vec{U}^*_K$ als Betrag $|\vec{U}^*_K|$ und dessen zugeordnete Winkellage $\alpha^*_{UK}$. Im weiteren Montageverfahren ergibt sich daraus eine bestimmte Winkellage $\alpha_{FK1}$ oder $\alpha_{FK2}$ zwischen der verwendeten Felge 1 und des zugeordneten Reifens 2 aufgrund derer die nachfolgende Montage durch die Auswerte- und Steuervorrichtung 10 entsprechend steuerbar ist.

Innerhalb des zulässigen Verdrehwinkelbereichs $\Delta\alpha_{zul}$ kann neben oder alternativ zur Urunwuchtoptimierung $\vec{U}^*_K$ auch der Rundlauffehler $\Delta\vec{r}_K$ des Komplettrades optimiert werden. Bei einem Alternativverfahren müsste statt der Unwucht $\vec{U}_R$ des Reifens die Rundlaufschwankung $\Delta\vec{r}_R$ des Reifens zumindest in dessen Hochpunktwinkellage erfasst werden. Dies kann nach folgender Funktion:

$$Z(\Delta\alpha) = C_1\ \left|\vec{U}_K\ (\Delta\alpha)\ \right| +\ C_2\ \left|\ \Delta\vec{r}_K\ (\Delta\alpha)\ \right|$$

errechnet werden, wobei

$Z(\Delta\alpha)$= Zielgröße
$C_1$= Unwuchtfaktor
$C_2$= Rundlauffaktor

Diese kann dann innerhalb des zulässigen Verdrehwinkelbereichs

$\Delta\alpha_{zul}$ $\left(-\dfrac{\Delta\alpha_{zul}}{2} <\ \Delta\alpha\ <+\dfrac{\Delta\alpha_{zul}}{2}\right)$ so optimiert werden, dass dessen Differenzwinkel auch ein Minimaldifferenzwinkel zu 180˚ aufweist, wodurch die Rundlaufschwankung $\Delta\vec{r}_{Fe}$ als $Z(\Delta\alpha)$ der Felge 1 und die Rundlaufschwankung $\Delta\vec{r}_R$ des Reifens 2 in gewissen Bereich verringerbar ist. Dies hat den Vorteil, dass dadurch auch die Laufruhe verbessert wird und Überschreitungen der zulässigen Rundlaufschwankung $\Delta\vec{r}_{Kzul}$ des Komplettrades 3 verhinderbar sind.

Die Rundlaufschwankung $\Delta\vec{r}_K$ des Komplettrades 3 kann aber auch innerhalb der Urunwuchtoptimierung zusätzlich mit berücksichtigt werden. Dabei wird dann der Verdrehwinkelbereich $\Delta\alpha_{zul}$ so weit ausgenutzt, dass sich sowohl die Urunwucht $\vec{U}^*_K$ als auch die Rundlaufschwankung $\Delta\vec{r}_K$ verringert.

Gleichzeitig kann auch vorgesehen werden, dass bei der Radialkraftschwankung $\vec{F}_K$ nicht nur ein Toleranzbereich für die Messungenauigkeit sondern ein vorgebbarer Toleranzbereich ausgenutzt wird, in dem die Urunwuchtwirkung $\vec{U}_K$ und/oder die Rundlaufwirkung $\Delta\vec{r}_K$ des Komplettrades 3 verringert wird.

Mit vergleichbaren Wirkungen können auch innerhalb des maximal zulässigen $\Delta\alpha_{zul}$-Matchwinkels gewisse Zielfunktion bzgl. der Einhaltung der Urunwuchtwirkung $\vec{U}_K = C\,(\vec{U}^*_K)$ und/oder der Einhaltung eines bestimmten Rundlauffehlers $\Delta\vec{r}_K = C\,(\Delta\vec{r}^*_K)$ des Komplettrades 3 mit Hilfe der Auswerte- und Steuervorrichtung 10 errechnet werden, wobei $c$ einen Zielfaktor darstellt.

Nach der Festlegung des optimierten Verdrehungswinkels von $-\dfrac{\Delta\alpha_{zul}}{2}$ bis $+\dfrac{\Delta\alpha_{zul}}{2}$ gelangt der Reifen 2 zu einer Reifenseifstation 15, durch die dessen Reifenwülste in bekannter Weise mit einem Seifgleitmittel eingestrichen oder benetzt werden. Parallel dazu gelangt auch die Felge 1 in eine Felgenseifstation 16, in der der Wulstsitz mit einem Seifgleitmittel benetzt wird. Dabei wird die zuvor erfasste Winkellage sowohl der Felge 1 als auch des Reifens 2 durch vorgegebene Umdrehungszahlen oder durch eine vorgegebene Referenzlage beibehalten oder von der Auswerte- und Steuervorrichtung 10 durch entsprechende Schrittmotoren erfassbar gesteuert.

Zur Montage und zur winkelgerechten Ausrichtung der Felge 1 und des Reifens 2 ist nachfolgend eine programmgesteuerte Handhabungsvorrichtung 17 vorgesehen, die als Montageroboter ausgebildet ist. Diese verfügt über einen dreidimensional im Raum steuerbaren Greiferarm 18, der zunächst die Felge 1 winkelgerecht auf einem Montagetisch ablegt und die dort fixiert wird. Dann erfasst der Montagearm 18 den Reifen 2 unter Berücksichtigung seiner Winkellage. Von der Auswerteund Steuervorrichtung 10 gesteuert wird nun der Reifen 2 gegenüber der Felge 1 um den errechneten optimierten Verdrehwinkel z.B. $+\dfrac{\Delta\alpha_{zul}}{2}$ eingedreht und dann vertikal mit dem oberen Reifenwulst in das Felgenbett gedrückt. Die Felge 1 und der Reifen 2 könnten aber auch durch herkömmliche Förderbänder zu einer Vormontagestation transportiert werden.

Nachfolgend wird dann das winkelgerecht vormontierte Fahrzeugrad zu einer herkömmlichen Aufziehstation 19 transportiert. Dabei wird die Felge 1 horizontal in der Aufziehstation 19 fixiert und der obere Reifenwulst mittels einer Andruckrolle 30 und eines Aufziehwerkzeuges 31 während einer Umdrehung über das Felgenhorn in das Felgenbett gezogen. Die errechneten und eingedrehten Winkellage zwischen dem Reifen 2 und der Felge 1 bleiben dabei unverändert und können auch zusätzlich noch mittels einer optischen Erfassungsvorrichtung überprüft werden. Der Reifen 2 könnte aber auch nach der Montage in der Aufziehstation 19 noch in die vorgegebene optimierte Winkellage eingedreht werden. Zum Verdrehen müssten dann aber die Reifenwülste von den Felgenhörnern weggedrückt werden, um eine reibungsfreie Verdrehung des Reifens zu gewährleisten.

Nachfolgend wird das montierte Fahrzeugrad einer herkömmlichen Füllstation 20 zugeführt und mittels einer Füllglocke mit einem vorgegebenen Reifendruck befüllt, so dass beide Reifenwülste in ihre Wulstsitze der Felge 1 einspringen. Zur optimierten Montage sind in der Füllstation 20 noch akustische Aufnehmer 21 angeordnet, die das akustische Einspringen der Reifenwülste in die Wulstsitze überwachen. Wird kein eindeutiges akustisches Einspringsignal erfasst, wird der Füllvorgang gesteuert durch die Auswerte- und Steuervorrichtung 10 mit einem erhöhten Fülldruck bis zu einem vorgegebenen Höchstdruck ein- oder mehrmals wiederholt.

Nachfolgend wird das fertig montierte Fahrzeugrad einer Auswuchtstation 22 übergeben und auf einer Rotationsachse festgespannt. Während der nachfolgenden Rotation wird dann mit Hilfe von Unwuchtaufnehmern 23 zunächst die Radurunwucht $\vec{U}^0_K$ in bekannter Art ermittelt. Vorzugsweise wird diese erfasste Urunwucht $\vec{U}^0_K$ mit der zuvor errechneten optimierten Urunwucht $\vec{U}^*_K$ verglichen und dessen Differenzwert ermittelt. Dabei können die Differenzwerte gespeichert und statistisch ausgewertet werden, in dem aus einer vorgegeben Anzahl dessen mittlere Fehlerquote errechnet wird. Daraus lassen sich Korrekturfaktoren $C_K$ errechnen, mit dessen Hilfe der optimierte Verdrehwinkel z.B.

$+\dfrac{\Delta\alpha_{zul}}{2}*C_K$ zwischen Felge 1 und Reifen 2 korrigierbar ist, wobei sich weiter optimierbare Urunwuchtwerte einstellen lassen. Nachfolgend werden dann aus dem ermittelten Unwuchtwerten in der Auswerte- und Steuervorrichtung 10 oder in der Auswuchtstation 22 direkt, die in zwei Ausgleichsebenen erforderlichen Ausgleichsgewichte errechnet und an der Felge 1 des Fahrzeugrades manuell oder automatisiert befestigt.

Neben der Unwuchtstation 22 kann auch noch eine Station zur Unrundheitsmessung $\Delta\vec{r}_K$ des fertig montierten Fahrzeugrades vorgesehen werden, die den Rundlauffehler des Komplettrades 3 ermittelt und unzulässige Abweichungen signalisiert. Die ermittelten Rundlauffehler können auch statistisch ausgewertet und zur Optimierung des Matchwinkels genutzt werden.

**Patentansprüche**

**1.** Verfahren zur optimierten Fertigung eines Kraftfahrzeugrades auf einer Felge (1) und darauf aufgezogenen Reifens (2) unter Optimierung der Laufruhe durch Matchen mit folgenden Schritten:

a) Ermitteln mindestens der Winkellage $\alpha_{FR}$ (24) des Maximalwertes der ersten Harmonischen der Radialkraft-schwankung $\vec{F}_R$ des Reifens (2);

b) Ermitteln mindestens der Winkellage $\alpha_{FFe}$ (27) des Minimalwertes der ersten Harmonischen der Rundlauf-abweichung $\Delta\vec{r}_{Fe}$ der Felge (1) ;

c) Bestimmen einer gemeinsamen Match-Winkellage $\alpha_{FFe}$ (27) von Felge (1) und Reifen (2), bei dem sich die erste Harmonische der Radialkraftschwankung $\vec{F}_R$ des Reifens (2) und die erste Harmonische der Rundlauf-abweichung $\Delta\vec{r}_{Fe}$ der Felge (1) vektoriell so überlagern, dass die Radialkraftschwankung des Komplettrades verkleinert wird,

**<u>dadurch gekennzeichnet, dass</u>** zur Optimierung der Urunwucht $\vec{U}_K$ des Fahrzeugrades (3),

d) zusätzlich die Exzentrizität $\Delta\vec{r}$ der Felge (1) betragsmäßig ermittelt wird;

e) der Betrag, der durch die Exzentrizität $\overrightarrow{\Delta r_{Fe}}$ verursachten Radialkraftschwankung $\overrightarrow{F_{Fe}}$ der Felge (1) durch Multiplikation der Exzentrizität $\Delta\vec{r}_{Fe}$ der Felge und einer vorgegebenen typabhängigen Reifensteifigkeit $C_R$ errechnet wird;

f) ein zulässiger Verdrehwinkelbereich $\Delta\alpha_{zul.}$ zwischen der Felge (1) und dem Reifen (2) bezogen auf die Match-Winkellage $\alpha_{FFe}$ (27) bei Einhaltung der zulässigen Radialkraftschwankung $\vec{F}_{Kzul}$ des Komplettrades (3) unter Berücksichtigung der errechneten Radialkraftschwankung $\vec{F}_{Fe}$ der Felge (1) und der ermittelten oder vorgege-benen Radialkraftschwankung $\vec{F}_{Fe}$ des Reifens (2) errechnet wird;

g) dass mindestens zusätzlich die Unwuchtwinkellage $\alpha_{UR}$ (25) des Reifens (2) und die Unwucht $\vec{U}_{Fe}$ der Felge (1) nach Betrag $|\vec{U}_{Fe}|$ und Winkellage $\alpha_{UFe}$ (29) ermittelt werden, und

h) dass daraus die Verdrehwinkellage $\alpha_{UK}$ zwischen der Felge (1) und dem Reifen (2) zur Unwuchtoptimierung des Fahrzeugrades(3) innerhalb des zulässigen Verdrehwinkelbereichs $\Delta\alpha_{zul.}$ ausgehend von der Match-Win-kellage $\alpha_{FFe}$ (27), bei dem die Differenz der Unwuchtwinkellage $\alpha_{UR}$ (25) des Reifens (2) und der Unwuchtwin-kellage $\alpha_{UFe}$ (29) der Felge (1) zu einem Verdrehwinkel $\pm\dfrac{\Delta\alpha_{zul}}{2}$ von 180˚ am geringsten ist.

**2.** Verfahren nach Anspruch 1, **<u>dadurch gekennzeichnet, dass</u>** aus der ermittelten oder vorgegebenen maximal zulässigen Radialkraftschwankung $\vec{F}_{Rzul}$ des Reifens (2) und der errechneten Radialkraftschwankung $\vec{F}_{Fe}$ der Felge (1) unter Einhaltung einer vorgegebenen zulässigen Radialkraftschwankung $F_{Kzul}$ des Komplettrades (3) ausgehend von der Match-Winkellage $\alpha_{FFe}$ zwei Verdrehwinkel $\alpha_{FK1,}$ $\alpha_{FK2}$ durch eine Auswerte- und Steuervorrichtung (10) berechnet werden, die den maximal zulässigen Verdrehwinkelbereich $\Delta\alpha_{zul}$ darstellen.

**3.** Verfahren nach Anspruch 1 oder 2, **<u>dadurch gekennzeichnet, dass</u>** die zulässige Radialkraftschwankung $\vec{F}^0_K$ des Komplettrades (3) durch die Auswerte- und Steuervorrichtung (10) **dadurch** berechnet wird, dass von einer vorge-gebenen maximal zulässigen Radialkraftschwankung $\vec{F}_{Kmax}$ bzw. von einer Toleranzgrenze ein Messfehleranteil $\Delta F_{Kmess}$ oder ein größerer Anteil subtrahiert wird.

**4.** Verfahren nach einem der vorhergehenden Ansprüche, **<u>dadurch gekennzeichnet, dass</u>** die Radialkraftschwan-kung $\vec{F}_R$ des Reifens (2) mittels einer Reifen-Uniformity-Maschine ermittelt wird, wobei der Betrag aus der Amplitude $|\vec{F}_R|$ der Harmonischen erster Ordnung gebildet wird und die Winkellage $\alpha_{FR}$ der Radialkraftschwankung $\vec{F}_R$ als Phasenlage der harmonischen erster Ordnung erfasst wird.

**5.** Verfahren nach einem der Ansprüche 1 bis 3, **<u>dadurch gekennzeichnet, dass</u>** als vorgegebene Radialkraftschwan-kung $\vec{F}_R$ des Reifens (2) höchstens die maximal zulässige Radialkraftschwankung $\vec{F}_{K,max}$ des Komplettrades (3) oder des jeweiligen Reifentyps vorgesehen ist und ein derartiger Wert in der Auswerte- und Steuervorrichtung (10) eingegeben und gespeichert wird.

**6.** Verfahren nach einem der vorhergehenden Ansprüche, **<u>dadurch gekennzeichnet, dass</u>** für die Unwucht $\vec{U}_{Fe}$ der Felge (1) ein erfassbarer Bezugspunkt (29) als dessen Winkellage $\alpha_{UFe}$ vorgegeben ist oder in einer Felgenmess-station (11) nach Betrag $|\vec{U}_{Fe}|$ und Winkellage $\Delta_{UFe}$ ermittelt und der Auswerte- und Steuervorrichtung (10) zugeführt wird.

7.  Verfahren nach einem der vorhergehenden Ansprüche, **dadurch gekennzeichnet, dass** zumindest die Winkellage $\alpha_{FR}$ (24) der Radialkraftschwankung $\vec{F}_R$ und die Winkellage $\alpha_{UR}$ (25) der Unwucht $\vec{U}_R$ des Reifens (2) auf dessen Flanke punktförmig markiert sind und von einer optischen Erfassungsvorrichtung (8) als deren Winkellage $\alpha_{FR}$, $\alpha_{UR}$ erfasst und der Auswerte- und Steuervorrichtung (10) zugeführt werden.

8.  Verfahren nach einem der vorhergehenden Ansprüche 1 bis 6, **dadurch gekennzeichnet, dass** die Radialkraftschwankung $\vec{F}_R$ und die Unwucht $\vec{U}_R$ des Reifens (2) von einer Reifen-Uniformity-Maschine nach Betrag $|\vec{F}_R|$, $|\vec{U}_R|$ und Winkellage $\alpha_{FR}$ (24), $\alpha_{UR}$ (25) ermittelt und der Auswerte- und Steuervorrichtung (10) zugeführt werden.

9.  Verfahren nach einem der vorhergehenden Ansprüche, **dadurch gekennzeichnet, dass** die Auswerte- und Steuervorrichtung (10) mindestens aus einer Unwuchtwinkellage $\alpha_{UFe}$ (29) der Felge (1) und der Unwuchtwinkellage $\alpha_{UR}$ (25) des Reifens (2), ausgehend von der Radialkraft-Match-Winkellage $\alpha_{FFe}$ (27) durch eine Subtraktion mit dem maximal zulässigen Verdrehungswinkel $\dfrac{\Delta\alpha_{zul}}{2}$ unter Zugrundelegung der beiden Verdrehrichtungen $\pm\dfrac{\Delta\alpha_{zul}}{2}$ einen optimierten Verdrehwinkel $\alpha_{FK1}$, $\alpha_{FK2}$ berechnet, bei dem die Differenz zu einem Verdrehwinkel von 180˚ am geringsten ist.

10.  Verfahren nach einem der vorhergehenden Ansprüche, **dadurch gekennzeichnet, dass** die Auswerte- und Steuervorrichtung (10) ausgehend von der Radialkraft-Matchwinkellage $\alpha_{FR}$ (27) und des maximal zulässigen Verdrehbereichs $\Delta\alpha_{zul}$ durch eine Vektoraddition der Reifen- $_R$ und Felgenunwucht $_{Fe}$ und dem maximal zulässigen Verdrehwinkel $\Delta\alpha_{zul}$ einen optimierten Urunwuchtvektor $*_K$ und daraus dessen optimierte Unwuchtwinkellage $\alpha*_{UK}$ errechnet.

11.  Verfahren nach einem der vorhergehenden Ansprüche, **dadurch gekennzeichnet, dass** nach Erfassung oder Ermittlung der Unwucht- $\alpha_{UR}$ (25), $\alpha_{UFe}$ (29) und Radialkraftwinkellagen $\alpha_{FR}$ (24), $\alpha_{FFe}$ (27) von Reifen (2) und Felge (1) diese nach einem Seifvorgang so zu der errechneten optimierten Winkellage $\alpha_{FK1}$, $\alpha_{FK2}$ gegeneinander verdreht werden, dass die maximal zulässige Radialkraftschwankung $_{Kmax}$, des Komplettrades (3) nicht überschritten und die Urunwuchtwirkung $\vec{U}*_K$ optimiert ist und dann der Reifen (2) in der berechneten Winkellage $\alpha_{FK1}$, $\alpha_{FK2}$ zur Felge (1) montiert, befüllt und anschließend ausgewuchtet wird.

12.  Verfahren nach Anspruch 11, **dadurch gekennzeichnet, dass** der Füllvorgang auf ein Einspringen der Reifenwülste in die Wulstsitze der Felge (1) durch Akustikaufnehmer (21) überwacht wird und bei einer Fehlermeldung der Vorgang mit einem erhöhten Fülldruck ein- oder mehrmals wiederholt wird.

13.  Verfahren nach einem der vorhergehenden Ansprüche, **dadurch gekennzeichnet, dass** der gesamte Reifenherstellungsprozess von einer zentralen Auswerte- und Steuervorrichtung (10) messwertmäßig erfasst und ausführungsmäßig gesteuert wird, wobei die Auswerte- und Steuervorrichtung (10) als programmgesteuerte Recheneinrichtung ausgebildet ist.

14.  Verfahren nach Anspruch 13, **dadurch gekennzeichnet, dass** die in der Auswuchtstation (22) gemessenen Urunwuchtwerte $\vec{U}*_K$ einer Vielzahl von Kompletträdern (3) mit dem zuvor in der Auswerte- und Steuervorrichtung (10) errechneten Werten verglichen und bei einer ermittelten Abweichung von dem gebildeten Mittelwert daraus ein Korrekturwert $C_K$ errechnet wird, der zur Berücksichtigung in den nachfolgenden optimierten Verdrehwinkeln $\pm\dfrac{\Delta\alpha_{zul}}{2}$ dient.

15.  Verfahren zur optimierten Fertigung eines Kraftfahrzeugrades auf einer Felge (1) und darauf aufgezogenen Reifens (2) unter Optimierung der Laufruhe durch Matchen mit folgenden Schritten:

    a) Ermitteln mindestens der Winkellage $\alpha_{FR}$ (24) der maximalen Radialkraftschwankung $\vec{F}_R$ des Reifens (2);
    b) Ermitteln mindestens der Winkellage $\alpha_{FFe}$ (27) der minimalen Rundlaufabweichung $\Delta\vec{r}_{Fe}$ der Felge (1);
    c) Bestimmen einer gemeinsamen Match-Winkellage $\alpha_{FFe}$ (27) von Felge (1) und Reifen (2), bei dem sich die maximale Radialkraftschwankung $\vec{F}_R$ des Reifens (2) und der minimalen Rundlaufabweichung $\Delta\vec{r}_{Fe}$ der Felge

(1) entsprechend ihrer Beträge kompensieren;

**dadurch gekennzeichnet, dass** zur Optimierung des Rundlauffehlers $\Delta r_K$ des Fahrzeugrades (3),

d) zusätzlich die Exzentrizität $\Delta \vec{r}_F$ der Felge (1) betragsmäßig ermittelt wird;

e) der Betrag, der durch die Exzentrizität $\Delta\,\overrightarrow{\Delta r_F}$ verursachten Radialkraftschwankung $\overrightarrow{F_{Fe}}$ der Felge (1) durch Multiplikation der Exzentrizität $\Delta \vec{r}_{Fe}$ der Felge und einer vorgegebenen typabhängigen Reifensteifigkeit $C_R$ errechnet wird;

f) ein zulässiger Verdrehwinkelbereich $\Delta \alpha_{zul}$. zwischen der Felge (1) und dem Reifen (2) bezogen auf die Match-Winkellage $\alpha_{FFe}$ (27) bei Einhaltung der zulässigen Radialkraftschwankung $\vec{F}_{Kzul}$ des Komplettrades (3) unter Berücksichtigung der errechneten Radialkraftschwankung $\vec{F}_{Fe}$ der Felge (1) und der ermittelten oder vorgegebenen Radialkraftschwankung $\vec{F}_{Fe}$ des Reifens (2) errechnet wird;

g) das mindestens zusätzlich die Exzentrizität $\Delta r_R$ nach Betrag $\Delta r_R$ und Winkellage $\alpha_{RR}$ des Reifens (2) ermittelt wird, und

h) das daraus die Verdrehwinkellage $\alpha_{RK}$ zwischen der Felge (1) und dem Reifen (2) zur Rundlaufoptimierung des Fahrzeugrades (3) innerhalb des zulässigen Verdrehwinkelbereichs $\Delta\alpha_{zul}$ ausgehend von der Match-Winkellage $\alpha_{FFe}$ (27), bei dem die Differenz der Unrundheitswinkellage $\alpha_{RR}$ des Reifens (2) und der Unrundwinkellage $\Delta r_{RFe}$ der Felge (1) zu einem Verdrehwinkel $\dfrac{\Delta \alpha_{zul}}{2}$ von 180˚ am geringsten ist.

16. Vorrichtung zur Durchführung des Verfahrens nach einem der Ansprüche 1 bis 14, **dadurch gekennzeichnet, dass** zur Erfassung mindestens der Unwucht- und der Radialkraftwinkellage des Reifens (2) eine optische Winkelerfassungsvorrichtung und zur Ermittlung der Unwucht und Radialkraftschwankung der Felge (1) eine Felgenmessvorrichtung (11) vorgesehen ist, deren erfasste Werte eine Auswerte- und Steuervorrichtung (10) zugeführt werden, die daraus und aus vorgegebenen Werten unter Berücksichtigung der maximal zulässigen Radialkraftschwankung des Komplettrades (3) einen optimierten Verdrehwinkel errechnet, der in einer nachfolgenden Montagestation (17,19) eingedreht wird, wobei das montierte Rad (3) dann in einer Füllstation (20) mit Druckluft befüllt und anschließend in einer vorgesehenen Auswuchtstation (22) dynamisch ausgewuchtet wird.

17. Vorrichtung nach Anspruch 16, **dadurch gekennzeichnet, dass** die Auswerte- und Steuervorrichtung (10) als zentrale elektronische Rechenvorrichtung ausgebildet ist, die mit der Winkelmessvorrichtung (5), der Felgenmessvorrichtung (11), der Reifenseifstation (15), der Felgenseifstation 16, der Handhabungsvorrichtung (17), der Aufziehstation (19), der Füllstation (20) und der Auswuchtstation (22) verbunden ist und die entsprechenden Messwerte erfasst und daraus den optimierten Verdrehwinkel $\alpha_{FK1}$, $\alpha_{FK2}$ er rechnet und die entsprechenden Ausführungsstationen steuert.

Auswerte- und Steuervorrichtung

Fig. 1

EP 2 075 564 A2

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004006822 A1

- DE 3003127 A1